# EUROPÄISCHE PATENTSCHRIFT

(11) **EP 3 204 180 B1**
(45) Veröffentlichungstag und Bekanntmachung des Hinweises auf die Patenterteilung: **29.01.2020**
(21) Anmeldenummer: 15750668.4
(22) Anmeldetag: 30.07.2015
(51) Int. Cl.: B23D 77/00, B23D 77/14

(54) **BOHRWERKZEUG, INSBESONDERE REIBAHLE**
DRILLING TOOL, IN PARTICULAR REAMER
OUTIL DE PERÇAGE, EN PARTICULIER ALÉSOIR

(30) Priorität: 07.10.2014 DE 102014014932
(43) Veröffentlichungstag der Anmeldung: 16.08.2017
(73) Patentinhaber: Audi AG, 85045 Ingolstadt (DE)
(72) Erfinder: KOPTON, Peter, 85092 Kösching (DE)
(74) Vertreter: Eickmeyer, Dietmar
(86) Internationale Anmeldenummer: PCT/EP2015/067579
(87) Internationale Veröffentlichungsnummer: WO 2016/055185

(56) Entgegenhaltungen:
- CN-U- 202 411 558
- DE-A1- 2 750 705
- DE-A1- 4 236 824
- US-A- 4 274 771
- US-A1- 2002 172 567
- US-A1- 2005 283 160

## Beschreibung

Die Erfindung betrifft ein Bohrwerkzeug, insbesondere eine Reibahle, nach dem Oberbegriff des Patentanspruches 1 sowie ein Verfahren zur Oberflächenbearbeitung einer Innenwandung einer vorgebohrten Werkstück-Kernbohrung nach dem Patentanspruch 7. Ein solches Werkzeug und ein solches Verfahren sind aus der US 4274771 A bekannt.

Aus der DE 10 2013 004 105 A1 ist eine gattungsgemäße Reibahle bekannt, die beispielhaft im Fahrzeugbau zur Feinbearbeitung einer Innenwandung einer Zylinderkopf-Bohrung einsetzbar ist, um deren Oberflächengüte sowie Form- und Maßgenauigkeit der Bohrung zu verbessern. Die Reibahle weist am Außenumfang zumindest eine Hauptschneide mit einer radial äußeren Schneidenkante auf, die sich längs der Bohrkörper-Längsachse gewendelt bis zu einer an der Bohrerspitze angeordneten Schneidenecke erstreckt. Die Hauptschneide geht an der stirnseitigen Schneidenecke in eine quer zur Bohrkörper-Längsachse ausgerichtete Nutschneide über.

Mit der obigen Reibahle erfolgt die Oberflächenbearbeitung der Kernbohrung zweistufig mit den folgenden Bearbeitungsschritten: In einem ersten Vorbearbeitungsschritt wird die Reibahle zunächst mit geringer Drehzahl sowie darauf abgestimmter Vorschubgeschwindigkeit in die Kernbohrung eingefahren, wodurch die Nutschneide in der Kernbohrungs-Innenwandung eine spiralförmige Nut erzeugt. Im vollständig eingefahrenen Zustand befindet sich die an die Nutschneide anschließende Hauptschneide bereits vollständig in Eingriff mit der spiralförmigen Nut. Im anschließenden zweiten Bearbeitungsschritt kann die Hauptschneide der Reibahle unter Rotation, jedoch ohne Axialvorschub einen umfangsseitigen Materialabtrag vornehmen.

Die beiden Bearbeitungsschritte sind zeitaufwändig hintereinander durchzuführen. Zudem ist beim zweiten Bearbeitungsschritt der mit der Hauptschneide durchgeführte umfangsseitige Materialabtrag mit einer hohen Schneidbelastung verbunden. Um daher einen vorzeitigen Werkzeugbruch zu vermeiden, wird die obige Reibahle bevorzugt bei der Bearbeitung weicherer Werkstoffe, etwa Aluminium, einsetzbar ist.

Die Aufgabe der Erfindung besteht darin, ein Bohrwerkzeug, insbesondere Reibahle, bereitzustellen, bei der im Vergleich zum Stand der Technik trotz höherer Fertigungsgeschwindigkeiten eine Schneidbelastung des Bohrwerkzeuges reduziert wird.

Die Aufgabe ist durch die Merkmale des Patentanspruches 1 oder des Patentanspruches 7 gelöst. Bevorzugte Weiterbildungen der Erfindung sind in den Unteransprüchen offenbart.

Die Erfindung beruht auf dem Sachverhalt, dass mit der oben dargelegten, aus dem Stand der Technik bekannten Reibahle lediglich eine zeitaufwändige zweistufige Bearbeitung ermöglicht ist. Vor diesem Hintergrund weist das Bohrwerkzeug gemäß dem kennzeichnenden Teil des Patentanspruches 1 zumindest eine Nutschneide auf, die der, der Bohrerspitze zugewandten Schneidenecke der Hauptschneide in der Werkzeug-Rotationsrichtung vorgelagert ist. Im Aufbohrvorgang erzeugt die vorgelagerte Nutschneide eine Nut, die der Schneidenecke der Hauptschneide vorauseilt. In der vorauseilenden Nut ist die Schneidenecke der Hauptschneide geführt, und zwar im Wesentlichen ohne Schneidbelastung. Auf diese Weise kann das Bohrwerkzeug auch in Verbindung mit festeren Werkstoffen eingesetzt werden, ohne dass es zu einem vorzeitigen Werkzeugbruch kommt.

Bei herkömmlichen Reibahlen ist die Schneidenecke der Hauptschneide an der Bohrerspitze dagegen sehr hohen Schneidbelastungen ausgesetzt. In einem solchen gängigen Bohrwerkzeug geht die seitliche Hauptschneide an ihrer stirnseitigen Schneidenecke in eine stirnseitige Querschneide über, mit der ein zusätzlicher Materialabtrag an der Kernbohrungs-Innenwandung erfolgt. Erfindungsgemäß wird dagegen die Hauptschneide ohne eine solche stirnseitige Querschneide ausgelegt.

Die von der Nutschneide im Aufbohrvorgang erzeugte spiralförmige Nut weist einen über eine Nuttiefe radial nach außen zurückgesetzten Nutgrund auf, der über seitlich hochgezogene Nutflanken in die Kernbohrungs-Innenwandung übergeht. Zur Erzeugung der Nut weist die Nutschneide stirnseitig an der Bohrerspitze eine quer zur Bohrkörper-Längsachse verlaufende Stirnschneidkante auf. Die Stirnschneidkante geht an einer stirnseitigen Schneidenecke in eine entlang der Bohrkörper-Längsachse verlaufende, radial äußere Nutgrund-Schneidkante über. Die Nutgrund-Schneidkante erstreckt sich bis zu einer von der Bohrerspitze abgewandten weiteren Schneidenecke, an die sich eine quer zur Bohrkörper-Längsachse verlaufende, weitere Nutflanken-Schneidenkante anschließt.

Mit dem erfindungsgemäßen Bohrwerkzeug erfolgt der Aufbohrvorgang nicht mehr zweistufig, sondern in einer Einschussbearbeitung. Das Bohrwerkzeug kann dabei insbesondere bei Verfahren für eine Finish- oder Schrubb-Bearbeitung zur Herstellung hochgenauer Bohrungen eingesetzt werden. Beim Aufbohrvorgang wird das Bohrwerkzeug in einer kombinierten Rotations- und Vorschubbewegung in die Kernbohrung eingefahren. Die Rotations- und Vorschubbewegungen sind dabei so aufeinander abgestimmt, dass die stirnseitige Schneidenecke der Hauptschneide ohne Schneidbelastung in der spiralförmigen Nut geführt ist, die mittels der vorauseilenden Nutschneide in die Kernbohrungs-Innenwandung erzeugt wird. Die Hauptschneide bewirkt beim Aufbohrvorgang somit ausschließlich eine radial äußere Schälbearbeitung, während die Nutschneide sowohl in Radialrichtung als auch in Axialrichtung Material von der Kernbohrungs-Innenwandung abträgt.

Nachfolgend wird die Schneidengeometrie des Bohrwerkzeugs detaillierter beschrieben: So läuft an der stirnseitigen Nutflanken-Schneide eine Nutspanfläche und eine an der Bohrerspitze ausgebildete Hauptfreifläche zusammen. Die Nut-Spanfläche und die stirnseitige Hauptfreifläche spannen einen Keilwinkel auf. Im Hinblick auf die Auslegung der Vorschubgeschwindigkeit in Axialrichtung ist unter anderem auch ein Freiwinkel von Bedeutung, der durch die Hauptfreifläche definiert ist. Bei einer Erhöhung der Vorschubgeschwindigkeit ist auch der Freiwinkel zu erhöhen. Dies geht jedoch mit einer Reduzierung des Keilwinkels der Stirnschneide einher, wodurch die Gefahr von vorzeitigem Verschleiß sowie Werkzeugbruch erhöht ist.

An der, von der Bohrerspitze abgewandten Nutflanken-Schneidkante sowie an der Nutgrund-Schneidkante geht die Spanfläche in weitere, radial äußere Freiflächen über, die einen Freiwinkel mit einer gedachten Kreislinie aufspannen, entlang der sich die Nutflanken-Schneidkante und die Nutgrund-Schneidkante bewegen.

Die Schneidenecke der Hauptschneide ist um einen Längsversatz von der Nutschneide beabstandet. Der Längsversatz ist so ausgelegt, dass in Abstimmung mit dem Axialvorschub und der Rotationsbewegung die Schneidenecke der Hauptschneide in der vorauseilenden Nut geführt ist.

Bevorzugt kann die Nuttiefe der spiralförmig in der Kernbohrungs-innenwandung verlaufenden Nut identisch sein mit der von der Hauptschneide abzutragenden Materialstärke oder geringfügig kleiner ausgelegt sein. Entsprechend kann die Nutgrund-Schneidenkante auf einem Schneidendurchmesser liegen, der kleiner als der oder gleich dem Schneidendurchmesser der Schneidenkante der Hauptschneide ist.

Zudem ist es bevorzugt, wenn die in der Werkzeug-Rotationsrichtung nacheilende Hauptschneide die vorauseilende Nutschneide mit einem vorgegebenen Überstand entgegen der Vorschubrichtung überlappt. Dadurch kann nach der Erzeugung der spiralförmigen Nut ein noch unbearbeiteter, verbleibender Materialsteg von der nacheilenden Hauptschneide bis auf den Nenndurchmesser abgetragen werden.

Bevorzugt ist die stirnseitige Schneidenecke der Hauptschneide vollständig außer Materialeingriff in der spiralförmigen Nut geführt. Hierzu kann die stirnseitige Schneidenecke der Hauptschneide um einen lichten Freiraum von einer, in der Vorschubrichtung vorgelagerten Nutflanke der Nut beabstandet sein.

Die Hauptschneide sowie die Nutschneide bilden zusammen einen Schneidensatz. Bevorzugt können zwei, drei oder noch mehr Schneidensätze umfangsverteilt am Bohrwerkzeug angeordnet sein. In einer Ausführungsform kann der Schneidensatz nicht nur eine einzige Hauptschneide aufweisen, sondern vielmehr in der Rotationsrichtung betrachtet zumindest zwei hintereinander angeordnete Hauptschneiden, die beide der voreilenden Nutschneide in der Rotationsrichtung nacheilen. Die von der Nutschneide erzeugte Nuttiefe kann bevorzugt bereits dem Nenndurchmesser der Bohrung entsprechen oder alternativ um ein Aufmaß kleiner sein als der Nenndurchmesser.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Es zeigen:
- Fig. 1: in einer perspektivischen Darstellung ein als Reibahle ausgeführtes Bohrwerkzeug;
- Fig. 2: in einer Detailansicht die Werkzeugspitze des Bohrwerkzeugs;
- Fig. 3: in einer Vorderansicht die Bohrerspitze des Bohrwerkzeuges;
- Fig. 4: eine perspektivische, stark vereinfachte Teilansicht, die einen Aufbohrvorgang veranschaulicht;
- Fig. 5: eine Ansicht entsprechend der Fig. 4, jedoch mit einer, in Abwicklung gezeigten Kernbohrungs-Innenwandung;
- Fig. 6 und 7: ein weiteres Ausführungsbeispiel des Bohrwerkzeugs.

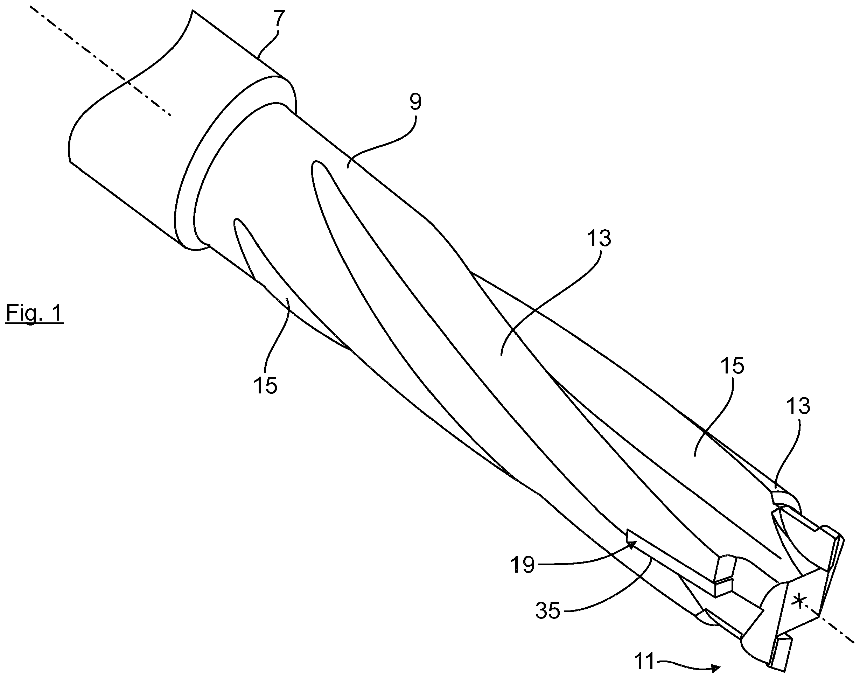

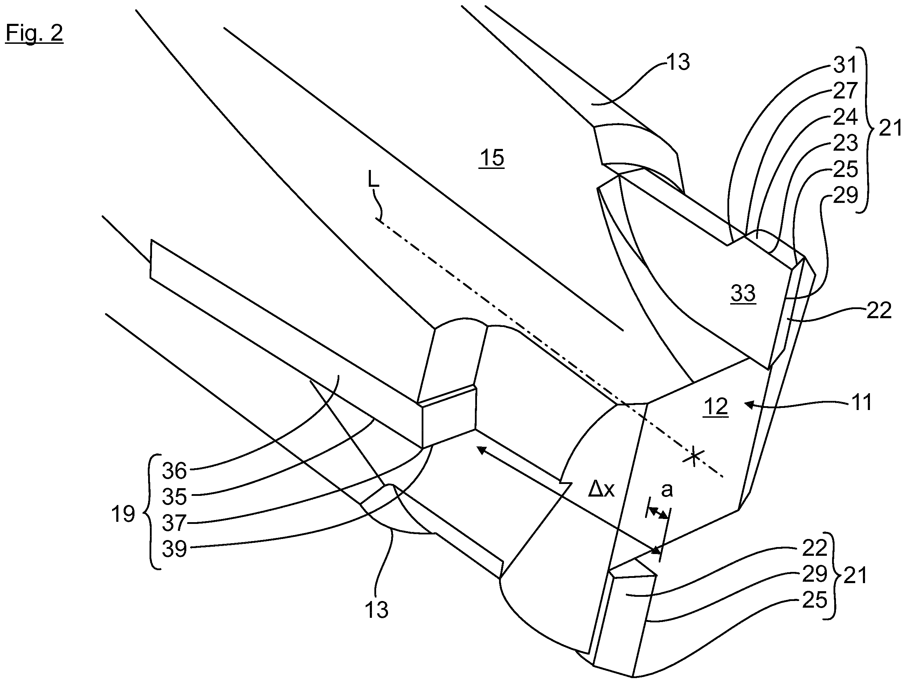

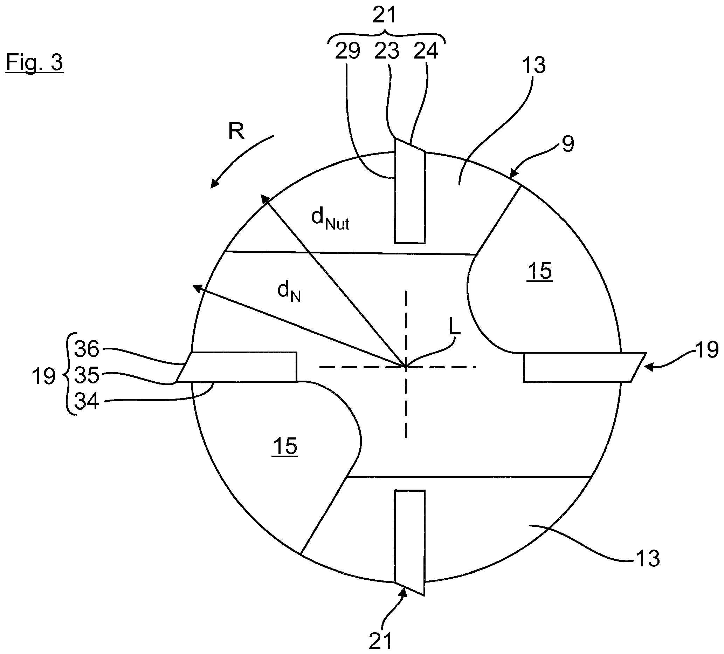

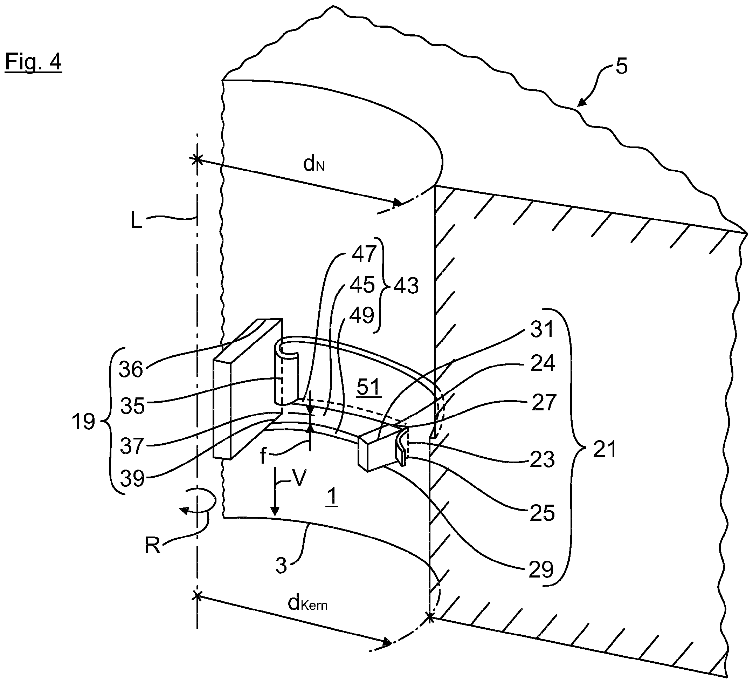

In den Fig. 1 und 2 ist ein als Reibahle ausgeführtes Bohrwerkzeug zur Oberflächenbehandlung einer später anhand der Fig. 3 und 4 gezeigten Innenwandung 1 einer Kernbohrung 3 eines Werkstückes 5 gezeigt. Das Bohrwerkzeug weist einen Spannschaft 7 zum Einspannen in einen nicht gezeigten Bohrfutter einer Bohrvorrichtung sowie einen daran anschließenden Bohrkörper 9 auf. Zwischen der abgeflachten Bohrerspitze 11 und dem Spannschaft 7 erstrecken sich gemäß der Fig. 3 zwei Bohrerstege 13 entlang einer Längsachse L sowie gewendelt um die Längsachse L. Zwischen den beiden Bohrerstegen 13 sind Spannuten 15 angeordnet.

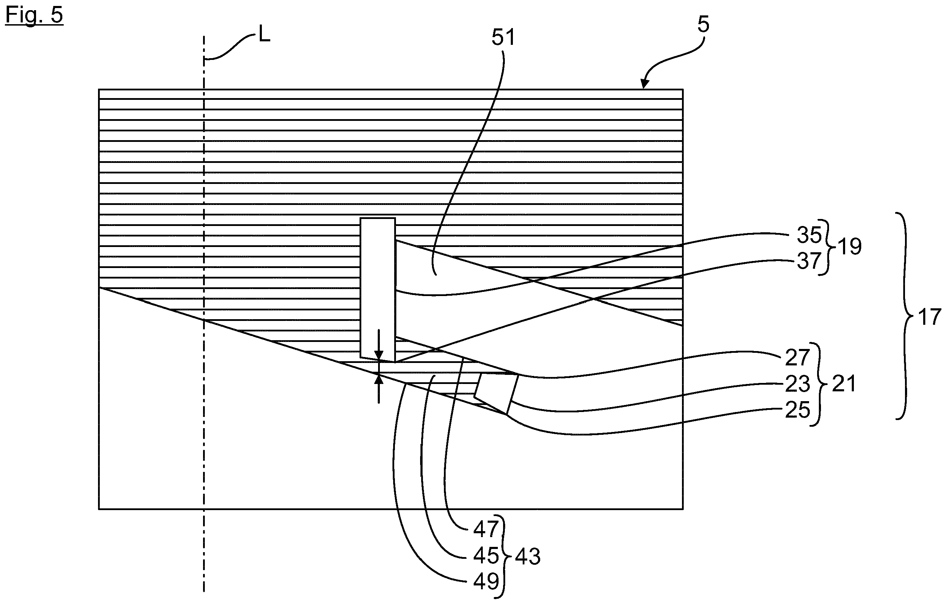

In jedem der Bohrerstege 13 ist ein Schneidensatz 17 (Fig. 5) ausgebildet, der jeweils eine Hauptschneide 19 und eine Nutschneide 21 aufweist. Die beiden Schneidensätze 17 sind mit Bezug auf die Längsachse L symmetrisch angeordnet, um eine gleichmäßige Schneidbelastung des Bohrwerkzeuges zu gewährleisten.

Wie aus der Fig. 1 hervorgeht, sind die Haupt- und Nutschneiden 19, 21 als separate Einsatzteile ausgeführt, die über zum Beispiel nicht gezeigte Schraubverbindungen am Bohrkörper 9 befestigt sind. Die im jeweiligen Schneidensatz 17 angeordnete Nutschneide 21 weist eine radial nach außen abragende Nutgrund-Schneidkante 23 auf. Diese erstreckt sich gemäß der Fig. 2 oder 4 entlang der Längsachse L zwischen einer stirnseitigen Schneidenecke 25 und einer davon abgewandten Schneidenecke 27. Die Nutgrund-Schneidkante 23 geht an der stirnseitigen Schneidenecke 25 in eine Stirnschneidkante 29 über, die an der Bohrerspitze 11 quer zur Längsachse L verläuft und eine Bohrer-Stirnseite 12 mit einem Überstand a (Fig. 2) überragt. An der davon abgewandten Schneidenecke 27 schließ sich eine ebenfalls quer zur Bohrkörper-Längsachse L verlaufende Nutflanken-Schneidkante 31 (Fig. 2 oder 4) an. An den oben beschriebenen Schneidkanten 23, 29, 31 laufen eine Spanfläche 33 mit Freiflächen 22, 24 der Nutschneide 21 zusammen, die mit einem Freiwinkel an die jeweiligen Schneidkanten anschließen.

Wie aus den Figuren weiter hervorgeht, ist die Hauptschneide 19 um einen Längsversatz Δx (Fig. 2) von der in der Rotationsrichtung R vorgelagerten Nutschneide 21 des jeweiligen Schneidensatzes 17 beabstandet. Die Hauptschneide 19 ist mit einer radial äußeren Schneidenkante 35 ausgebildet, die sich entlang der Längsachse L bis zu einer, der Bohrerspitze 11 zugewandten Schneidenecke 37 erstreckt. Die Schneidkante 35 geht an der Schneidenecke 37 in eine quer zur Bohrkörper-Längsachse L verlaufende Körperkante 39 (Fig. 2 oder 4) über. Sowohl die Körperkante 39 als auch die Schneidenecke 37 sind beim Aufbohrvorgang ohne Materialeingriff mit der Kernbohrungs-Innenwandung 1. An die Schneidkante 35 der Hauptschneide 19 schließt sich entgegen der Werkzeug-Rotationsrichtung R eine weitere Freifläche 36 (Fig. 2) an.

In der Fig. 3 liegt die Nutgrund-Schneidenkante 23 auf einem Schneidendurchmesser d_{Nut}, der um eine Differenz kleiner als der den Nenndurchmesser der Bohrung 3 definierenden Schneidendurchmesser d_{N} der radial äußeren Schneidenkante 35 der Hauptschneide 19 ist. Die Differenz kann beispielhaft 50µm oder kleiner sein. Alternativ dazu können die beiden Schneidendurchmesser auch identisch ausgelegt sein.

Anhand der Fig. 4 und 5 ist das Verfahren zur Oberflächenbearbeitung der Kernbohrungs-Innenwandung 1 gezeigt. Zum einfacheren Verständnis sind in den Fig. 4 und 5 jeweils nur die Nut- und Hauptschneiden 19, 21 eines einzigen Schneidensatzes 17 gezeigt, und zwar bei weggelassenem Bohrkörper 9. In der Fig. 5 ist die bereits bearbeitete Oberfläche der Innenwandung 1 mit horizontalen Linien gekennzeichnet, die auf einen Nenndurchmesser d_{N} (Fig. 4) aufgebohrt ist. Demzufolge wird das Bohrwerkzeug in einer kombinierten Rotations- und Vorschubbewegung R, V in die Werkstück-Kernbohrung 3 eingetrieben, der vor dem Aufbohrvorgang einen Kerndurchmesser d_{Kern} (Fig. 4) aufweist. Die Rotationsbewegung R sowie der Axialvorschub V des Bohrwerkzeugs ist so ausgelegt, dass die Nutschneide 21 eine spiralförmig verlaufende Nut 43 in der Kernbohrungs-Innenwandung 1 erzeugt, die gemäß der Fig. 4 einen radial äußeren Nutgrund 45 sowie seitliche Nutflanken 47, 49 aufweist. Die Erzeugung der Nut 43 erfolgt mit Hilfe der radial äußeren Nutgrund-Schneidkante 23, der in den Fig. 3 und 4 oberen Nutflanken-Schneidkante 31 sowie der Stirnschneidkante 29 der Nutschneide 21. Um die Schneidbelastung der Nutschneide 21 gering zu halten, ist die Nutbreite der erzeugten Nut 43 entsprechend klein auszulegen. Die Nuttiefe Δt (Fig. 4) der Nut 43 ist beispielhaft identisch mit der von der nacheilenden Hauptschneide 19 abzutragenden Materialstärke.

In der Fig. 4 oder 5 verbleibt an der, entgegen der linearen Vorschubrichtung V befindlichen, oberen Nutflanke 47 ein noch unbearbeiteter Materialsteg 51, der von der nacheilenden Hauptschneide 19 abgetragen wird, und zwar bis auf den vorgegebenen Nenndurchmesser d_{N} der Werkzeugbohrung.

Zudem ist in den Fig. 4 und 5 die Schneidenecke 37 der Hauptschneide 19 innerhalb der voreilenden Nut 43 geführt, und zwar mit einem Freiraum f (Fig. 3 oder 4) von der, der Vorschubrichtung V vorgelagerten Nutflanke 49 beabstandet. Sowohl die Schneidenecke 37 als auch die daran anschließende anschließende Körperkante 39 verbleiben daher nahezu ohne Schneidbelastung, wodurch ein vorzeitiger Verschleiß sowie ein Werkzeugbruch der Reibahle zuverlässig verhindert werden kann.

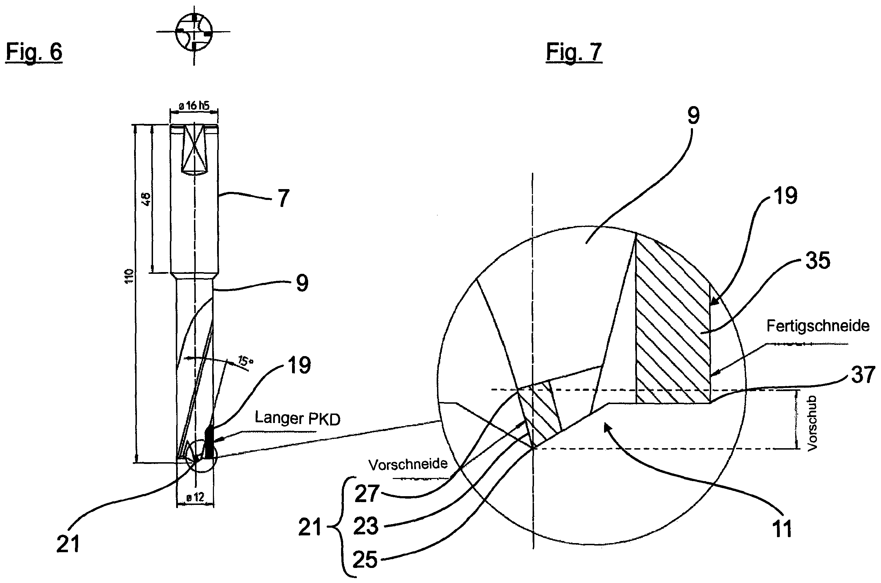

In den Fig. 6 und 7 ist ein weiteres Ausführungsbeispiel des Bohrwerkzeuges dargestellt. Der grundsätzliche Aufbau sowie die Funktionsweise ist dabei identisch mit dem Bohrwerkzeug der vorangegangen Ausführungsbeispiele. Wie in den vorangegangenen Figuren ist auch in den Fig. 6 und 7 je Schneidensatz 17 jeweils eine Nutschneide 21 sowie ein zugeordnete Hauptschneide 19 vorgesehen, die der Nutschneide 21 in der Werkzeug-Rotationsrichtung nachgeschaltet ist. Im Unterschied zu dem vorangegangenen Ausführungsbeispiel ist die Nutgrund-Schneidenkante 23 vergleichsweise klein dimensioniert, so dass die erzeugte Nut eine im Vergleich zu dem vorangegangenen Ausführungsbeispiel reduzierte Nutbreite aufweist. Auf diese Weise kann die Schneidbelastung der Nutschneide 21 weiter verhindert werden.

## Patentansprüche

1. Bohrwerkzeug, insbesondere Reibahle, zum Aufbohren einer Werkstück-Kernbohrung (3) auf einen Nenndurchmesser (d_{N}) mittels einer an einem Bohrkörper (9) ausgebildeten Hauptschneide (19), die eine radial äußere Schneidenkante (35) aufweist, die sich längs einer Bohrkörper-Längsachse (L) bis zu einer an der Bohrerspitze (11) angeordneten Schneidenecke (37) erstreckt, wobei im Aufbohrvorgang das Bohrwerkzeug unter Rotationsbewegung (R) und Vorschubbewegung (V) in die Werkstück-Kernbohrung (3) eintreibbar ist, wobei das Bohrwerkzeug zumindest eine Nutschneide (21) aufweist, die der Schneidenecke (37) der Hauptschneide (19) in der Werkzeug-Rotationsrichtung (R) vorgelagert ist, wobei die Nutschneide (21) zur Erzeugung der Nut (43) an der Bohrerspitze (11) eine quer zur Bohrkörper-Längsachse (L) verlaufende Stirnschneidkante (29) aufweist, die an einer Schneidenecke (25) in eine entlang der Bohrkörper-Längsachse (L) verlaufende Nutgrund-Schneidkante (23) übergeht, die an einer von der Bohrerspitze (11) abgewandten Schneidenecke (27) in eine quer zur Bohrkörper-Längsachse (L) verlaufende Nutflanken-Schneidkante (31) übergeht, und wobei an der Stirnschneidkante (29) eine Nut-Spanfläche (33) und eine an der Bohrerspitze (11) ausgebildete Hauptfreifläche (22) zusammenlaufen, wobei die Rotationsbewegung (R) und die Vorschubbewegung (V) so ausgelegt sind, dass beim Aufbohrvorgang die Nutschneide (21) in der Innenwandung (1) der Kernbohrung (3) eine Nut (43) erzeugt wird, in der die Schneidenecke (37) der Hauptschneide (19) mit zumindest reduzierter Schneidbelastung geführt ist, **dadurch gekennzeichnet, dass** an der von der Bohrerspitze abgewandten Nutflanken-Schneidkante (31) und an der Nutgrund-Schneidkante (23) die Spanfläche (33) in weitere radial nach außen gewandten Freiflächen (24) übergehen, die in der Rotationsrichtung (R) mit einem Freiwinkel an die Schneidkanten (31, 23) anschließen, und dass die Schneidenecke (37) der Hauptschneide (19) um einen Längsversatz (Δx) von der Nutschneide (21) beabstandet ist.

2. Bohrwerkzeug nach Anspruch 1, **dadurch gekennzeichnet, dass** die Nutgrund-Schneidenkante (23) auf einem Schneidendurchmesser (d_{Nut}) liegt, der kleiner als der oder gleich dem Schneidendurchmesser (d_{Haupt}) der radial äußeren Schneidenkante (35) der Hauptschneide (19) ist.

3. Bohrwerkzeug nach Anspruch 1 oder 2, **dadurch gekennzeichnet, dass** die radial äußere Schneidenkante (35) der Hauptschneide (19) an der, der Bohrerspitze (11) zugewandten Schneidenecke (37) in eine Körperkante (39) übergeht, die im Wesentlichen ohne Schneidbelastung aufgrund von Materialabtrag ist.

4. Bohrwerkzeug nach einem der vorhergehenden Ansprüche, **dadurch gekennzeichnet, dass** in der Rotationsrichtung (R) betrachtet zumindest zwei hintereinander angeordnete Nutschneiden (21) vorgesehen sind, die der Hauptschneide-Schneidenecke (37) vorgelagert sind.

5. Bohrwerkzeug nach einem der vorhergehenden Ansprüche, **dadurch gekennzeichnet, dass** die zumindest eine Hauptschneide (19) und die zumindest eine Nutschneide (21) einen Schneidensatz (17) bilden, und dass insbesondere zumindest ein oder mehrere Schneidensätze (17) am Bohrkörper ausgebildet sind.

6. Bohrwerkzeug nach einem der vorhergehenden Ansprüche, **dadurch gekennzeichnet, dass** die Hauptschneide (19) und die Nutschneide (21) zwei voneinander separate Bauteile sind oder in einem gemeinsamen Schneidenelement zusammengefasst sind.

7. Verfahren zum Aufbohren einer vorgebohrten Werkstück-Kernbohrung (3) auf einen Nenndurchmesser (d_{N}) mittels eines Bohrwerkzeugs nach einem der vorhergehenden Ansprüche, bei dem das Bohrwerkzeug zumindest eine Nutschneide (21) aufweist, die einer Schneidenecke (37) einer Hauptschneide (19) in der Werkzeug-Rotationsrichtung (R) vorgelagert ist, wobei die Rotationsbewegung (R) und die Vorschubbewegung (V) so ausgelegt sind, dass beim Aufbohrvorgang die Nutschneide (21) in der Innenwandung (1) der Kernbohrung (3) eine Nut (43) erzeugt, in der die Schneidenecke (37) der Hauptschneide (19) mit zumindest reduzierter Schneidbelastung geführt ist, dass die stirnseitige Schneidenecke (37) der Hauptschneide (19) ohne Materialeingriff in der Nut (43) geführt ist, und um einen lichten Freiraum (f) von einer, in der Vorschubrichtung (V) vorgelagerten Nutflanke (49) der Nut (43) beabstandet ist, und dass nach der Erzeugung der Nut (43) mittels der Nutschneide (21) auf der entgegen der Vorschubrichtung (V) liegenden Nutseite (47) ein noch unbearbeiteter Materialsteg (51) verbleibt, der von der Hauptschneide (19) abtragbar ist.

## Claims

1. Drilling tool, in particular reamer, for drilling a workpiece core bore (3) to a nominal diameter (d_{N}) by means of a main cutting edge (19), formed on a drilling body (9), which has a radially outer cutting edge (35) which extends longitudinally along a drilling body longitudinal axis (L) onto a cutting nose (37) disposed at the drilling tip (11), wherein in the drilling procedure the drilling tool can be driven into the workpiece core bore (3) using rotational movement (R) and advance movement (V), wherein the drilling tool has at least one groove cutter (21) which is positioned upstream of the cutting nose (37) of the main cutting edge (19) in the tool rotational direction (R), wherein the groove cutter (21) for generating the groove (43) has at the drilling tip (11) an end cutting edge (29), extending perpendicularly to the drilling body longitudinal axis (L), which at a cutting nose (25) transitions into a groove floor cutting edge (23), extending along the drilling body longitudinal axis (L), which transitions at a cutting nose (27) facing away from the drilling tip (11) into a groove flank cutting edge (31) extending perpendicularly to the drilling body longitudinal axis (L), and wherein on the end cutting edge (29) a groove rake face (33) and a main free surface (22) formed on the drilling tip (11) converge, wherein the rotational movement (R) and the advance movement (V) are designed such that in the drilling procedure the groove cutter (21) a groove (43) is generated in the inner wall (1) of the core bore (3), in which groove the cutting nose (37) of the main cutting edge (19) is guided with at least reduced cutting load, **characterised in that** on the groove flank cutting edge (31) facing away from the drilling tip and on the groove floor cutting edge (23) the rake face (33) transition into further free surfaces (24) turned radially to the outside, which in the rotational direction (R) adjoin on the cutting edges (31, 23) at a clearance angle, and that the cutting nose (37) of the main cutting edge (19) is spaced by a longitudinal offset (Δx) from the groove cutter (21).

2. Drilling tool according to claim 1, **characterised in that** the groove floor cutting edge (23) is located on a cutting edge diameter (d_{Nut}) which is smaller than or equal to the cutting edge diameter (d_{Haupt}) of the radially outer cutting edge (35) of the main cutting edge (19).

3. Drilling tool according to claim 1 or 2, **characterised in that** the radially outer cutting edge (35) of the main cutting edge (19) transitions at the cutting nose (37), facing the drilling tip (11), into a body edge (39) which is substantially without cutting load by reason of material removal.

4. Drilling tool according to any of the preceding claims, **characterised in that** viewed in rotational direction (R) at least two groove cutters (21) disposed one after another are provided, which are positioned upstream of the main cutting edge cutting nose (37).

5. Drilling tool according to any of the preceding claims, **characterised in that** the at least one main cutting edge (19) and the at least one groove cutter (21) form a cutting tool (17), and that in particular at least one or several cutting tools (17) are formed on the drilling body.

6. Drilling tool according to any of the preceding claims, **characterised in that** the main cutting edge (19) and the groove cutter (21) are two components separate from one another or are combined to form a shared cutting element.

7. Method for drilling a pre-drilled workpiece core bore (3) to a nominal diameter (d_{N}) by means of a drilling tool according to any of the preceding claims, in the case of which the drilling tool has at least one groove cutter (21), which is positioned upstream of a cutting nose (37) of a main cutting edge (19) in tool rotational direction (R), wherein the rotational movement (R) and the advance movement (V) are designed such that in the drilling procedure the groove cutter (21) generates in the inner wall (1) of the core bore (3) a groove (43) in which the cutting nose (37) of the main cutting edge (19) is guided with at least reduced cutting load, that the end-face-side cutting nose (37) of the main cutting edge (19) is guided without material engagement in the groove (43), and is spaced by a clear space (f) from a groove flank (49), positioned upstream in the advance direction (V), of the groove (43), and that after the generation of the groove (43) by means of the groove cutter (21) a still unprocessed material web (51) remains on the groove side (47) lying against the advance direction (V), which material web can be removed by the main cutting edge (19).

## Revendications

1. Outil de perçage, en particulier alésoir, destiné à aléser un alésage de pièce (3) jusqu'à l'obtention d'un diamètre nominal (d_{N}) au moyen d'une lame principale (19) formée sur un corps de foret (9), qui présente une arête de lame (35) radialement extérieure, qui s'étend le long d'un axe longitudinal de corps de foret (L) jusqu'à un coin de lame (37) disposé sur la pointe de foret (11), dans lequel, lors du processus d'alésage, l'outil de perçage peut être enfoncé dans l'alésage de pièce (3) sous l'effet d'un mouvement rotatif (R) et d'un mouvement d'avance (V), dans lequel l'outil de perçage présente au moins une lame de rainurage (21), qui est située en amont du coin de lame (37) de la lame principale (19) dans la direction de rotation d'outil (R), dans lequel la lame de rainurage (21), pour produire la rainure (43), présente sur la pointe de foret (11) une arête de lame frontale (29) s'étendant transversalement à l'axe longitudinal de corps de foret (L), qui passe au niveau d'un coin de lame (25) dans une arête de lame de fond de rainure (23) s'étendant le long de l'axe longitudinal de corps de foret (L), qui passe au niveau d'un coin de lame (27) opposé à la pointe de foret (11) dans une arête de lame de flanc de rainure (31) s'étendant transversalement à l'axe longitudinal de corps de foret (L), et dans lequel une face de coupe de rainurage (33) et une face de dépouille principale (22) réalisée sur la pointe de foret (11) convergent au niveau de l'arête de lame frontale (29), dans lequel le mouvement rotatif (R) et le mouvement d'avance (V) sont configurés de sorte que, lors du processus d'alésage, une rainure (43) est produite la lame de rainurage (21) dans la paroi intérieure (1) de l'alésage (3), dans laquelle le coin de lame (37) de la lame principale (19) est guidé avec une contrainte de coupe au moins réduite, **caractérisé en ce que**, au niveau de l'arête de lame de flanc de rainure (31) opposée à la pointe de foret et au niveau de l'arête de lame de fond de rainure (23), la face de coupe (33) passent dans d'autres faces de dépouille (24) tournées radialement vers l'extérieur, qui se raccordent dans la direction de rotation (R) avec un angle de dépouille aux arêtes de lame (31, 23), et que le coin de lame (37) de la lame principale (19) est espacé de la lame de rainurage (21) d'un décalage longitudinal (Δx).

2. Outil de perçage selon la revendication 1, **caractérisé en ce que** l'arête de lame de fond de rainure (23) se situe sur un diamètre de lame (d_{Nut}) qui est inférieur ou égal au diamètre de lame (d_{Haupt}) de l'arête de lame radialement extérieure (35) de la lame principale (19).

3. Outil de perçage selon la revendication 1 ou 2, **caractérisé en ce que** l'arête de lame radialement extérieure (35) de la lame principale (19) passe au niveau du coin de lame (37) tourné vers la pointe de foret (11) dans une arête de corps (39), qui est sensiblement exempte de contrainte de coupe en raison de l'enlèvement de matière.

4. Outil de perçage selon l'une quelconque des revendications précédentes, **caractérisé en ce que**, vu dans la direction de rotation (R), au moins deux lames de rainurage (21) disposées l'une derrière l'autre sont prévues, qui sont situées en amont du coin de lame de lame principale (37).

5. Outil de perçage selon l'une quelconque des revendications précédentes, **caractérisé en ce que** l'au moins une lame principale (19) et l'au moins une lame de rainurage (21) forment un jeu de lames (17), et qu'en particulier au moins un ou plusieurs jeux de lames (17) sont réalisés sur le corps de foret.

6. Outil de perçage selon l'une quelconque des revendications précédentes, **caractérisé en ce que** la lame principale (19) et la lame de rainurage (21) sont deux éléments séparés l'un de l'autre ou sont réunies en un élément lame commun.

7. Procédé pour aléser un alésage de pièce (3) préalablement percé jusqu'à l'obtention d'un diamètre nominal (d_{N}) au moyen d'un outil de perçage selon l'une quelconque des revendications précédentes, selon lequel l'outil de perçage présente au moins une lame de rainurage (21), qui est située en amont d'un coin de lame (37) d'une lame principale (19) dans la direction de rotation d'outil (R), dans lequel le mouvement rotatif (R) et le mouvement d'avance (V) sont configurés de sorte que, lors du processus d'alésage, la lame de rainurage (21) produit dans la paroi intérieure (1) de l'alésage (3) une rainure (43) dans laquelle le coin de lame (37) de la lame principale (19) est guidé avec une contrainte de coupe au moins réduite, que l'arête de lame frontale (37) de la lame principale (19) est guidée dans la rainure (43) sans prise de matière, et est espacée d'un espace libre intérieur (f) d'un flanc de rainure (49) de la rainure (43) situé en amont dans la direction d'avance (V), et que, après la production de la rainure (43) au moyen de la lame de rainurage (21), il reste une nervure de matière (51) encore non usinée sur la face de rainure (47) située à l'opposé de la direction d'avance (V), qui peut être enlevée de la lame principale (19).
